# DEMANDE DE BREVET EUROPEEN

(11) **EP 2 778 034 A2**
(43) Date de publication de la demande: **17.09.2014**
(21) Numéro de dépôt: 14166519.0
(22) Date de dépôt: 17.05.2010
(51) Int. Cl.: B62M 6/40, B62H 5/00, B62H 3/02

(54) **Système automatique de stockage de cycles, cycle pour un tel système et structure d'accueil pour un tel cycle.**

(30) Priorité: 22.12.2009 FR 0959442
(62) Demande divisionnaire de: 10163037.4
(71) Demandeur: JCDecaux SA, 92200 Neuilly-Sur-Seine (FR)
(72) Inventeur: Gagosz, Jean-Claude, 28410 BU (FR); Zeferino, Emmanuel, 78180 MONTIGNY LE BRETONNEUX (FR); Baumann, Eric, 78810 FEUCHEROLLES (FR); Tavernier, Patrick, 78000 VERSAILLES (FR)
(74) Mandataire: Cabinet Plasseraud

(57) **Abrégé**

Système automatique de stockage de cycles comprenant des cycles (101) et des structures d'accueil fixes (107) sur lesquelles peuvent se verrouiller des organes de verrouillage (110) appartenant aux cycles. Les organes de verrouillage comportent chacun une barre transversale qui s'engage dans une gâche (108) ouverte vers le haut appartenant à la structure d'accueil. La barre transversale peut tourner sur elle-même lorsque le cycle est verrouillé sur la structure d'accueil.

## Description

### DOMAINE DE L'INVENTION

La présente invention est relative aux systèmes automatiques de stockage de cycles, aux cycles pour de tels systèmes et aux structures d'accueil pour de tels systèmes.

Plus particulièrement, l'invention concerne un système automatique de stockage de cycles comprenant :
- une pluralité de cycles (par exemple des bicyclettes),
- une pluralité de structures d'accueil fixes sur lesquelles peuvent se verrouiller lesdits cycles.

Un système de stockage de cycles tel que décrit ci-dessus peut être utilisé par exemple pour mettre des cycles à disposition du public, moyennant identification de l'emprunteur du cycle et éventuellement paiement d'une location.

### ARRIERE PLAN DE L'INVENTION

Le document EP-A-1 820 722 décrit un exemple d'un tel système de stockage de cycles.

### OBJETS DE L'INVENTION

La présente invention a notamment pour but de perfectionner le verrouillage des cycles sur les structures d'accueil.

A cet effet, l'invention propose un système automatique de stockage de cycles comprenant :
- une pluralité de cycles (par exemple des bicyclettes) comportant chacun un organe de verrouillage,
- une pluralité de structures d'accueil fixes sur lesquelles peuvent se verrouiller lesdits cycles et comportant chacune au moins un poste de verrouillage adapté pour recevoir un cycle et incluant :
   - une gâche ouverte vers le haut selon une direction d'engagement sensiblement verticale et adaptée pour recevoir l'organe de verrouillage d'un cycle par emboîtement selon ladite direction d'engagement,
   - et un verrou électrique, comportant un organe de blocage mobile entre d'une part, une position de verrouillage où ledit organe de blocage est adapté pour bloquer l'organe de verrouillage du cycle dans la gâche et d'autre part, une position de déverrouillage où l'organe de blocage est adapté pour permettre à l'organe de verrouillage d'entrer et sortir de la gâche,
   l'organe de verrouillage du cycle comportant une barre transversale s'étendant selon un axe longitudinal entre deux extrémités, la gâche comporte au moins une auge de réception ouverte vers le haut et adaptée pour recevoir ladite barre transversale avec son axe longitudinal disposé sensiblement selon un axe horizontal fixe défini par l'auge de réception,
   la barre transversale, l'auge de réception et le verrou électrique étant conformés pour que la barre transversale puisse tourner autour de son axe longitudinal lorsque le cycle est verrouillé sur la structure d'accueil.

Dans différents modes de réalisation de ce système automatique de stockage de cycles selon l'invention, on peut éventuellement avoir recours en outre à l'une et/ou à l'autre des dispositions suivantes (éventuellement indépendamment les unes des autres ou combinées les unes aux autres ou combinées à toutes les différentes dispositions précitées :
- le verrou comporte au moins un organe d'actionnement qui est en liaison avec l'organe de blocage, ledit organe d'actionnement étant mobile avec l'organe de blocage dans un plan vertical perpendiculaire audit axe horizontal fixe, entre :
   - une première position correspondant à la position de déverrouillée du verrou, où ledit organe d'actionnement est disposé pour interférer avec la barre transversale de l'organe de verrouillage lorsque ladite barre transversale est engagée dans l'auge de réception dans la direction d'engagement,
   - et une deuxième position correspondant à la position verrouillée du verrou, ladite barre transversale de l'organe de verrouillage étant adaptée pour déplacer l'organe d'actionnement de sa première à sa deuxième position lorsque ladite barre transversale est introduite dans l'auge de réception, et ledit organe d'actionnement étant adapté pour actionner le verrou lorsqu'il passe de sa première à sa deuxième position en déplaçant l'organe de blocage en position de verrouillage.
- l'organe de blocage et l'organe d'actionnement appartiennent à une même pièce de verrou qui est montée pivotante entre les positions de verrouillage et de déverrouillage, autour d'un axe de rotation horizontal sensiblement parallèle audit axe horizontal fixe défini par l'auge de réception ;
- la pièce de verrou est sollicitée élastiquement vers la position de déverrouillage et le verrou électrique comporte une gâchette qui est mobile entre d'une part, une position de butée où ladite gâchette est adaptée pour maintenir la pièce de verrou en position de verrouillage et d'autre part, une position escamotée où ladite gâchette permet à la pièce de verrou de passer en position de verrouillage, la gâchette étant sollicitée élastiquement vers la position de butée et le verrou électrique comportant en outre un actionneur électrique adapté pour déplacer le gâchette de sa position de butée à sa position escamotée ;
- la pièce de verrou comporte une plaque de verrou qui s'étend sensiblement perpendiculairement à l'axe horizontal fixe et qui comporte une échancrure adaptée pour recevoir la barre transversale, ladite plaque de verrou formant deux becs qui encadrent ladite échancrure et constituent respectivement l'organe de blocage et l'organe d'actionnement ;
- l'organe de verrouillage du cycle comporte une pièce de liaison solidaire de la barre transversale et formant un T avec cette barre transversale, et la pièce de verrou comporte deux plaques de verrou solidarisées entre elles et adaptées pour s'engager sur la barre transversale de part et d'autre de la pièce de liaison ;
- la gâche comporte deux auges de réception disposées pour recevoir chacun une extrémité de la barre de liaison ;
- la gâche comporte également des parois latérales coopérant chacune par butée avec une extrémité de la barre transversale pour centrer ladite barre transversale lorsque le cycle est verrouillé sur le poste de verrouillage ;
- la barre transversale présente une section sensiblement circulaire ;
- la structure d'accueil forme une borne comportant une fente adaptée pour recevoir la roue avant du cycle lorsqu'il est verrouillé sur ladite structure d'accueil ;
- le cycle comporte un guidon solidaire d'une fourche qui porte la roue avant, l'organe de verrouillage du cycle étant solidaire de la fourche du cycle ;
- la structure d'accueil comporte une poutre sensiblement horizontale comportant plusieurs postes de verrouillage.

L'invention a également pour objet un cycle comportant un organe de verrouillage comprenant une barre transversale s'étendant sensiblement horizontalement dans une position normale d'utilisation du cycle, le cycle comportant un guidon solidaire d'une fourche qui porte la roue avant, l'organe de verrouillage comportant une pièce de liaison reliant la barre transversale à un support solidaire de la fourche, cette pièce de liaison s'étendant sensiblement horizontalement, dans la position normale d'utilisation du cycle, et ladite pièce de liaison étant reliée au support par une liaison élastique adaptée pour permettre un débattement vertical de ladite pièce de liaison.

Par ailleurs, l'invention a également pour objet une structure d'accueil pour un système automatique de stockage de cycles tel que défini ci-dessus, cette structure d'accueil comportant au moins un poste de verrouillage adapté pour recevoir un cycle et incluant :
- une gâche ouverte vers le haut selon une direction d'engagement sensiblement verticale et adaptée pour recevoir l'organe de verrouillage d'un cycle par emboîtement selon ladite direction d'engagement,
- et un verrou électrique, comportant un organe de blocage mobile entre d'une part, une position de verrouillage où ledit organe de blocage est adapté pour bloquer l'organe de verrouillage du cycle dans la gâche et d'autre part, une position de déverrouillage où l'organe de blocage est adapté pour permettre à l'organe de verrouillage d'entrer et sortir de la gâche,
la gâche comportant au moins une auge de réception ouverte vers le haut et définissant un axe horizontal, l'auge de réception étant adaptée pour recevoir une barre transversale appartenant à l'organe de verrouillage du cycle avec son axe longitudinal disposé sensiblement selon ledit axe horizontal défini par l'auge de réception,
l'auge de réception et le verrou électrique étant conformés pour que la barre transversale puisse tourner autour de son axe longitudinal lorsque le cycle est verrouillé sur la structure d'accueil.

### BREVE DESCRIPTION DES DESSINS

D'autres caractéristiques et avantages de l'invention apparaîtront au cours de la description suivante de plusieurs de ses formes de réalisation, données à titre d'exemples non limitatifs, en regard des dessins joints.

Sur les dessins :
- la figure 1 est une vue schématique en perspective montrant un système automatique de stockage de cycles décrit à titre d'information mais ne correspondant pas à l'invention,
- la figure 2 est une vue de détail montrant le verrouillage d'un cycle sur l'une des bornes formant les structures d'accueil de cycles de la figure 1,
- la figure 3 est une vue de détail montrant l'organe de verrouillage porté par le cycle de la figure 2,
- la figure 4 est une vue de côté de la borne sur laquelle est verrouillé le cycle de la figure 2,
- la figure 5 est une vue éclatée simplifiée de la gâche de la borne de la figure 4,
- la figure 6 est un schéma de principe illustrant le fonctionnement de la gâche de la figure 5, présenté sous la forme d'une coupe prise selon la ligne VI-VI de la figure 5,
- la figure 7 est un schéma bloc illustrant les composants électriques principaux du système de stockage de cycles des figures 1 à 6,
- la figure 8 est une vue schématique en perspective montrant un système automatique de stockage de cycles selon une première forme de réalisation de l'invention,
- la figure 9 est une vue en perspective d'un des cycles du système de la figure 8,
- la figure 10 est une vue de détail de l'organe de verrouillage du cycle de la figure 9, vu de trois quarts par-dessous,
- la figure 11 est une vue en coupe d'une partie de l'organe de verrouillage de la figure 10, montrant des contacts électriques prévus dans cet organe de verrouillage,
- la figure 12 est une vue de côté du cycle de la figure 9 verrouillé sur une des bornes formant les structures d'accueil de cycles du système de la figure 8,
- la figure 13 est une vue de détail en perspective de la borne de la figure 12 en position de verrouillage, le cycle étant omis pour plus de clarté,
- la figure 14 est une vue en coupe verticale de la gâche de la borne de la figure 13, au niveau d'une auge de réception latérale comportant des contacts électriques,
- la figure 15 est une vue en perspective, de trois quarts arrière, de la gâche de la borne de verrouillage de la figure 13, en position de verrouillage,
- les figures 16 et 17 sont des vues en perspective, selon deux directions différentes, montrant le verrou électrique qui équipe la gâche de la borne de verrouillage de la figure 13, en position de verrouillage,
- la figure 18 est une vue en coupe verticale du verrou électrique des figures 16 et 17, la coupe étant prise selon le plan médian de ce verrou électrique,
- la figure 19 est un schéma bloc du système automatique de stockage de cycles selon la première forme de réalisation de l'invention,
- la figure 20 est une vue en coupe verticale, dans le même plan médian que la figure 18, montrant la gâche de la borne de verrouillage de la figure 13 avec son verrou électrique en position de déverrouillage,
- la figure 21 est une vue similaire à la figure 19, montrant la gâche en perspective et en coupe verticale,
- la figure 22 est une vue en perspective montrant un système automatique de stockage de cycles selon une deuxième forme de réalisation de l'invention,
- les figures 23 et 24 sont des vues similaires respectivement aux figures 10 et 13, dans une troisième forme de réalisation de l'invention,
- la figure 25 est une vue en perspective montrant un cycle verrouillé sur une structure d'accueil, dans une quatrième forme de réalisation de l'invention,
- les figures 26 et 27 sont des vues partielles en coupe verticale, illustrant le verrouillage du cycle de la figure 25 sur sa structure d'accueil, et montrant le verrou électrique de la structure d'accueil respectivement en position déverrouillée et en position verrouillée,
- les figures 28 et 29 sont des vues en perspective illustrant deux variantes de la quatrième forme de réalisation de l'invention,
- la figure 30 est une vue de détail en perspective montrant l'organe d'accrochage d'un cycle de la quatrième forme de réalisation de l'invention,
- la figure 31 est une vue en coupe verticale de l'organe d'accrochage de la figure 30.

### DESCRIPTION PLUS DETAILLEE

Sur les différentes figures, les mêmes références désignent des éléments identiques ou similaires.

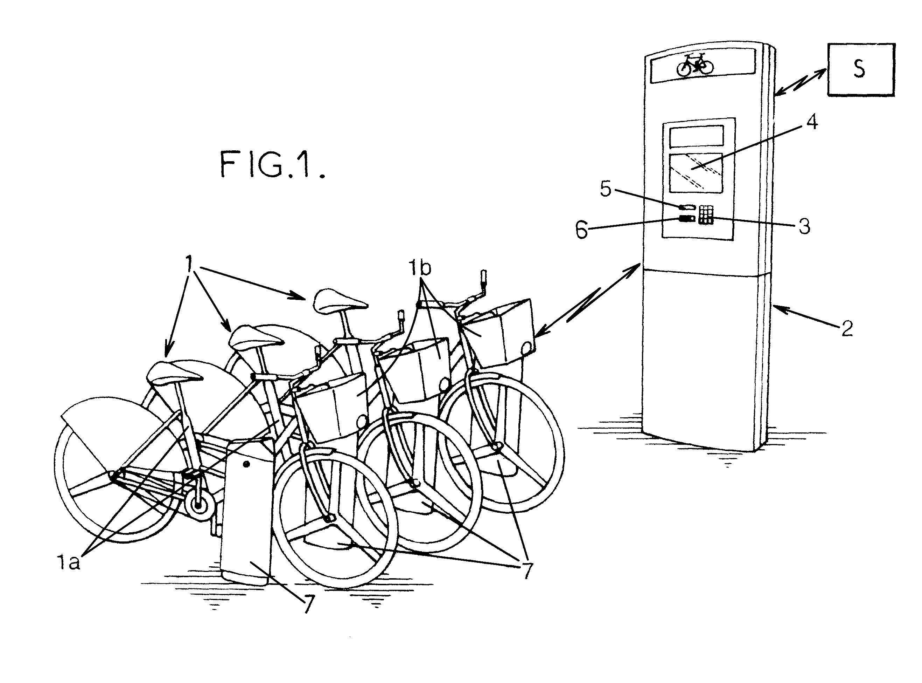

### Système de stockage illustré aux figures 1 à 7 (décrit pour information)

La figure 1 représente un système automatique de stockage de cycles 1 tels que notamment des bicyclettes, permettant par exemple de stocker des cycles sur la voie publique de façon à les mettre à disposition du public.

Ce système automatique de stockage de cycles peut comporter plusieurs stations de stockage de cycles, dont une est représentée sur la figure 1. Chaque station de stockage de cycles comprend un poste central de station 2, qui se présente ici sous la forme d'une borne interactive dotée d'une interface utilisateur comprenant par exemple un clavier 3, un écran 4, un lecteur de cartes portatives électroniques 5, un dispositif 6 d'impression de tickets, etc. En variante, la borne interactive 2 pourrait ne pas comporter d'interface utilisateur et être une simple passerelle de communication entre la station de stockage de cycles et un serveur central S.

La borne interactive 2 communique d'une part, avec le serveur central S qui gère les abonnements et les locations de cycles, et d'autre part, avec une pluralité de structures d'accueil 7 qui permettent de verrouiller les cycles pendant leur stockage et qui peuvent par exemple se présenter sous la forme de bornes de verrouillage fixées au sol sur la voie publique. Chaque borne de verrouillage est ici adaptée pour permettre le verrouillage d'un seul cycle 1, et constitue ainsi un seul poste de verrouillage de cycle.

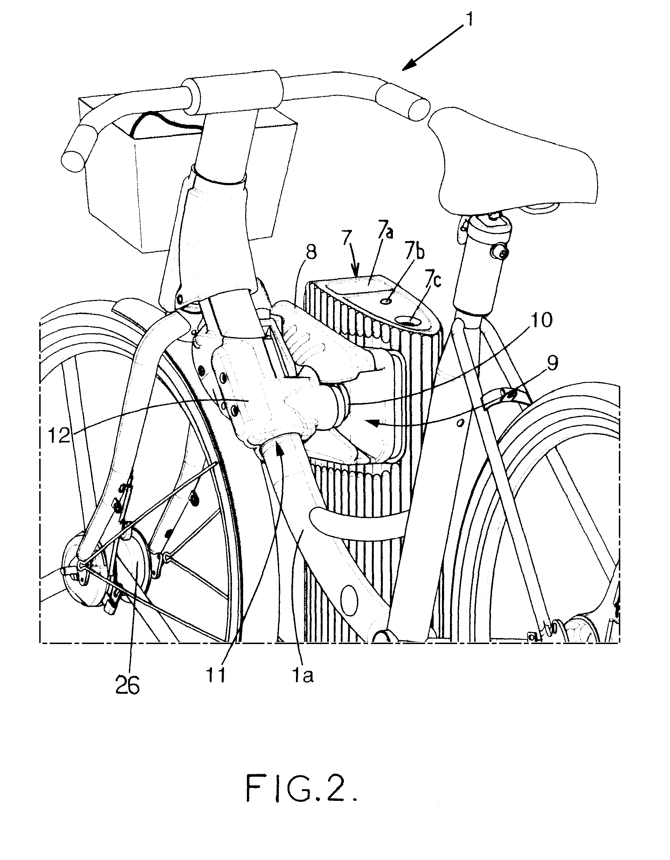

Comme on peut le voir sur la figure 2, chaque structure d'accueil 7 comporte une gâche 8 formant un boîtier rigide doté d'une ouverture échancrée 9 ouverte horizontalement et adaptée pour recevoir et retenir un organe de verrouillage 10 appartenant à un dispositif de verrouillage 11 solidaire par exemple du cadre 1a d'un des cycles 1.

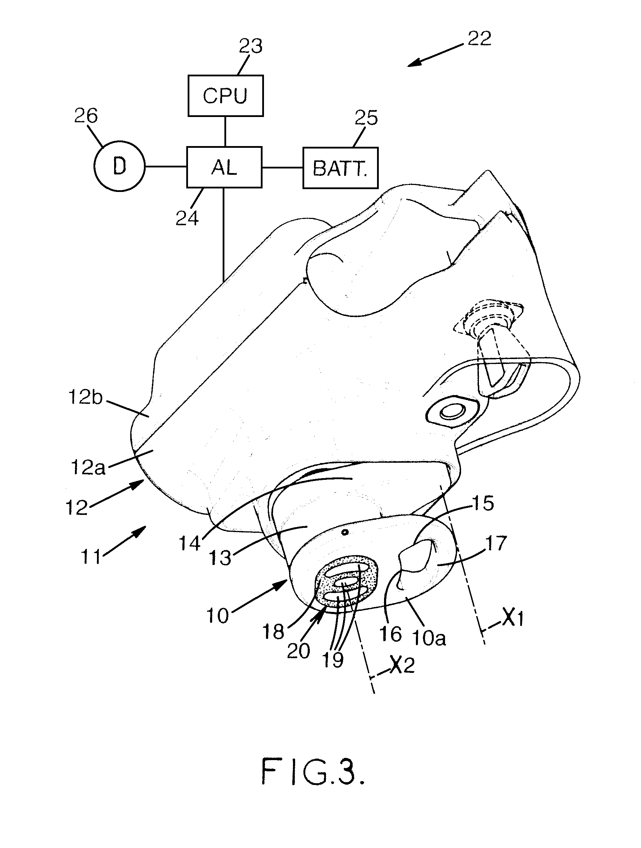

Comme on peut le voir sur la figure 3, le dispositif de verrouillage 11 peut comporter un support 12, qui peut par exemple être réalisé en deux parties 12a, 12b, solidarisées ensemble en venant enserrer l'un des tubes du cadre 1a du cycle. L'organe de verrouillage 10 peut éventuellement être monté mobile sur le support 12 de façon à permettre un certain débattement de l'organe de verrouillage 10 au moins verticalement par rapport audit cycle, comme expliqué dans le document EP-A-1 820 721.

Plus particulièrement, l'organe de verrouillage 10 peut être monté pivotant par rapport au support 12, autour d'un axe de rotation horizontal X1 perpendiculaire au plan moyen de l'organe de verrouillage 10. Dans l'exemple représenté sur les dessins, l'organe de verrouillage 10 comprend une plaque métallique verticale 10a qui est solidarisée à un moyeu 13 cylindrique de révolution présentant un axe central X2 parallèle à l'axe X1 et décalé par rapport à X1, le moyeu 13 étant lui-même solidaire d'un bras de levier 14 qui est monté pivotant sur le support 12 autour de l'axe de rotation X1.

L'organe de verrouillage 10 s'étend vers l'avant, c'est-à-dire vers l'axe de rotation X1, à partir du moyeu 13. A son extrémité avant, ledit organe de verrouillage 10 comporte un évidement traversant 15 qui est ouvert parallèlement aux axes X1, X2, et qui présente des bords en arc de cercle radialement intérieur 16 et radialement extérieur 17, sensiblement centrés sur l'axe central X2. De plus, en correspondance avec le moyeu 13, la plaque 10a de l'organe de verrouillage 10 comporte une zone électriquement isolante 18, orientée à l'opposé du boîtier 12, dans laquelle sont disposés des contacts électriques 19 métalliques formant une interface électrique 20. Ces contacts électriques 19 peuvent par exemple être au nombre de trois et comprendre par exemple :
- un contact central, plan et disposé en correspondance avec l'axe central X2, ce contact central étant de préférence allongé sensiblement horizontalement,
- et deux contacts de forme générale incurvée, allongés sensiblement horizontalement, qui sont disposés de part et d'autre du contact central, ces contacts de forme générale incurvée étant plans et présentant chacun un contour de forme incurvée, avec une concavité tournée vers l'axe central X2.

On notera que l'organe de verrouillage 10 pourrait comporter un nombre de contacts électriques 19 différent de trois (par exemple deux contacts).

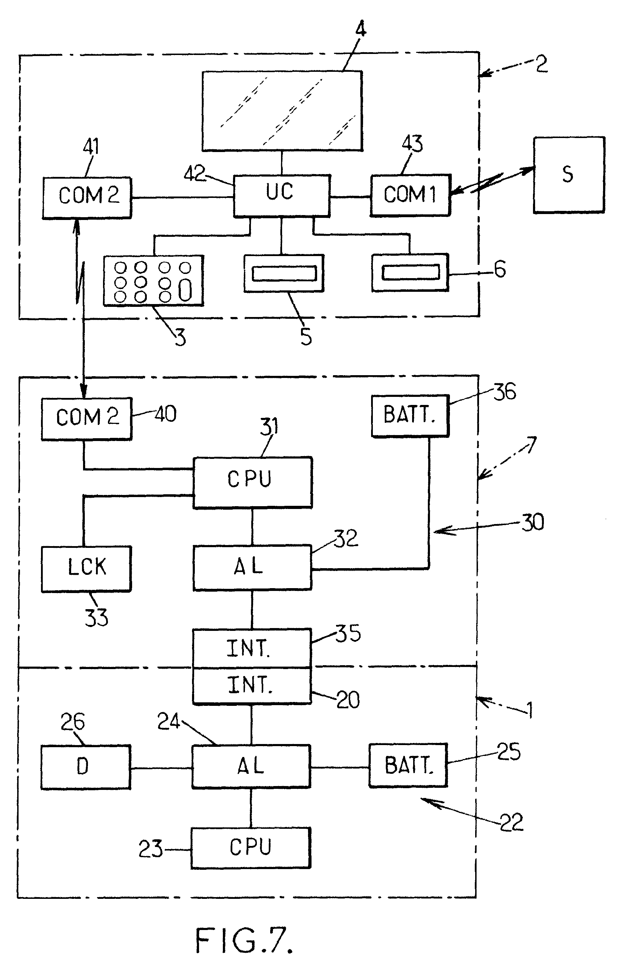

Les contacts électriques 19 permettent, lorsque le cycle 1 est verrouillé sur une structure d'accueil 7, de relier électriquement ladite structure d'accueil à un circuit électrique 22 appartenant au cycle 1, représenté sur la figure 7.

Ce circuit électrique 22 peut comprendre par exemple au moins :
- une unité centrale électronique 23 (CPU) telle qu'un microprocesseur ou microcontrôleur, adaptée pour communiquer avec la structure d'accueil 7,
- un circuit d'alimentation électrique 24 basse tension (AL) fonctionnant par exemple sous 6V ou 3V, qui alimente l'unité centrale électronique 23,
- une batterie 25 basse tension (BATT.) reliée au circuit d'alimentation électrique 24,
- et un générateur électrique tel qu'une dynamo, par exemple une dynamo-moyeu 26 (D) qui peut être logée par exemple dans le moyeu du cycle (voir figure 2) pour générer du courant électrique lors du roulage du cycle, ce générateur électrique étant également relié au circuit d'alimentation électrique pour charger la batterie 25.

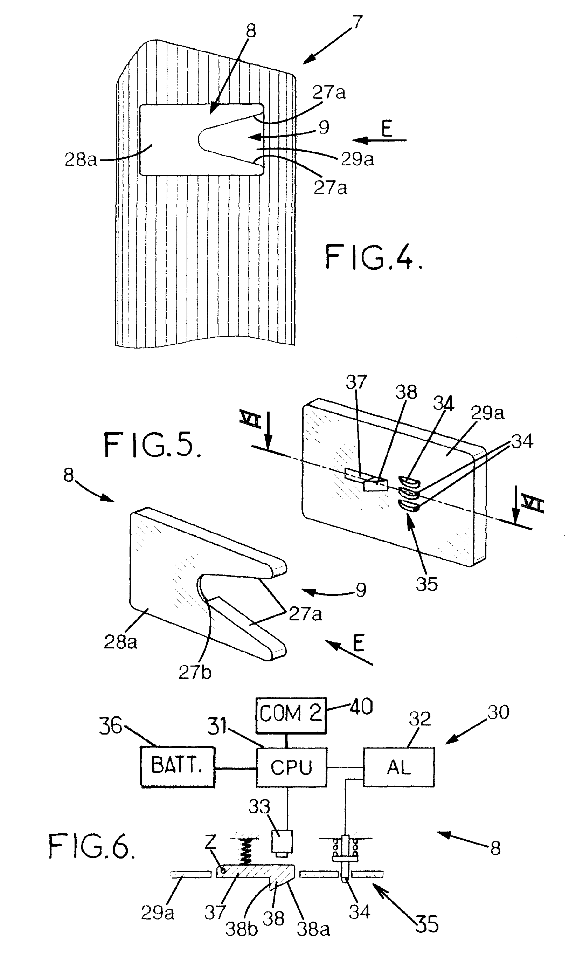

Comme représenté sur les figures 4 et 5, l'ouverture échancrée 9 de la gâche 8 comporte avantageusement deux guides 27a en forme de rampes convergeant l'une vers l'autre dans la direction horizontale d'engagement E de l'organe de verrouillage 10 dans la gâche 8. Ces guides 27a sont à adapter pour coopérer avec la plaque 10a de l'organe de verrouillage pour déplacer l'organe de verrouillage 10 autour de l'axe de rotation X1 jusqu'à une position nominale de verrouillage relativement à la gâche 8. On assure ainsi que l'organe de verrouillage 10 et plus particulièrement l'évidemment 15 de cet organe de verrouillage, se trouve à bonne hauteur par rapport à la gâche 10 après insertion dans ladite gâche, dans la direction d'engagement E.

Comme on peut le voir sur la figure 5, la gâche 8 comporte un boîtier 28a, incluant par exemple l'ouverture échancrée 9 et les guides 27a, et une embase 29a.

Comme on peut le voir sur les figures 6 et 7, l'embase 29a peut comporter un circuit électrique 30 comprenant par exemple :
- une unité centrale électronique 31 (CPU) telle qu'un microprocesseur ou microcontrôleur,
- un circuit d'alimentation électrique 32 (AL) basse tension (fonctionnant à la même tension que le circuit d'alimentation électrique 24 du cycle, par exemple sous 3V ou 6V) alimentant l'unité centrale 31,
- un électro-aimant 33 de commande de verrou (LCK) alimenté par le circuit d'alimentation électrique 32 et commandé par l'unité centrale 31,
- des contacts électriques 34, par exemple au nombre de trois, reliés au circuit d'alimentation électrique 32 et formant une interface électrique 35,
- une batterie 36 (BATT.) alimentant le circuit 32 sous basse tension,
- une interface de communication sans fil 40 (COM 2) reliée à l'unité centrale 31 et permettant de communiquer avec la borne interactive 2 sous un protocole radio courte portée tels que les protocoles BLUETOOTH, ZIGBEE ou autres,
- éventuellement, divers accessoires reliés à l'unité centrale 31, par exemple un lecteur de carte sans contact 7a, un voyant 7b et un bouton de commande 7c disposés par exemple sur la face supérieure de la borne 7 (voir la figure 2) pouvant servir par exemple à déclencher le déverrouillage d'un cycle 1 verrouillé sur la borne 7 un fois acquise l'autorisation de déverrouillage.

Les contacts électriques 34 peuvent notamment se présenter sous forme de broches faisant saillie hors de l'embase 29 et adaptées pour venir en contact respectivement avec les contacts électrique 19 de l'organe de verrouillage lorsque le cycle est verrouillé sur la borne de verrouillage 7. Les contacts électriques 34 peuvent par exemple être sensiblement alignés verticalement entre eux ; ils sont isolés électriquement les uns des autres par exemple par le boîtier de l'embase 29a, qui peut être réalisé en matériau électriquement isolant.

Par ailleurs, l'embase 29 comporte également un organe d'accrochage 37 tel que par exemple un crochet monté pivotant autour d'un axe vertical Z et doté d'un bec 38 faisant saillie par rapport à l'embase 29a. Le crochet 37 est sollicité élastiquement vers une positon de repos dans laquelle le bec 38 fait saillie par rapport à l'embase 29, de façon que lorsque l'organe de verrouillage 10 est engagé dans la gâche 8 dans la direction d'engagement E, le bec 38 soit repoussé jusque dans une position escamotée par coopération entre une surface inclinée 38a du bec 38 et le bord avant de la plaque 10a, puis ledit bec 38 s'engage dans l'évidemment 15 de la plaque 10a en retenant alors ladite plaque par coopération entre un bord d'arrêt 38b appartenant au bec et le bord extérieur 17 de l'évidemment 15.

Dans cette position, le moyeu 13 de l'organe de verrouillage est de préférence en contact avec le bord d'extrémité 27b de l'ouverture échancrée 9 du couvercle 28a, de façon que le cycle 1 soit alors verrouillé sur la borne de verrouillage 7 avec un faible jeu. Les positions relatives du bec 38 et des contacts 34-36 relativement à l'organe de verrouillage 10 sont représentées en traits mixtes sur la figure 7, dans la position de verrouillage du cycle 1 sur la borne de verrouillage 7.

L'organe d'accrochage 37 peut en outre être déplacé jusqu'à une position escamotée par l'électro-aimant 33, pour permettre d'enlever le cycle 1 de la borne de verrouillage 7.

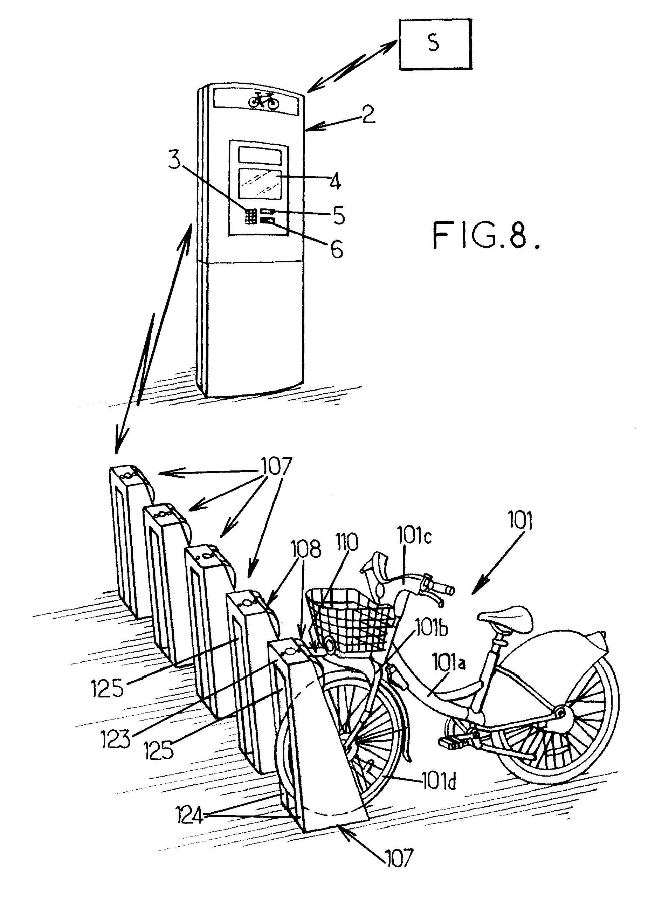

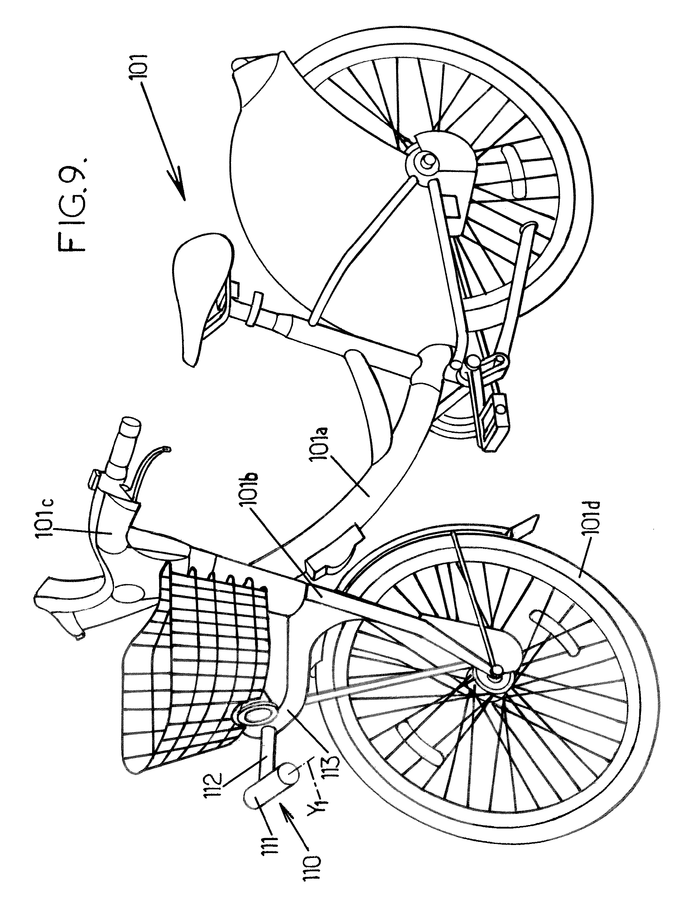

Comme représenté sur les figures 8 et 9, l'organe de verrouillage 10 est sollicité élastiquement vers une position de repos par un ressort 39.

Chaque borne de verrouillage 7 est autonome et n'est donc reliée ni à l'extérieur par aucun câble d'alimentation électrique et par aucun câble courant faible de transmission de données, ce qui facilite grandement l'installation des bornes 7.

La borne interactive 2, quant à elle, peut comporter une unité centrale électronique 42 (UC) telle qu'un microprocesseur ou autre, qui communique avec :
- le clavier 3, l'écran 4, le lecteur de carte 5 et le dispositif d'impression 6 susmentionnés,
- un interface de communication sans fil 42 (COM 1) communiquant elle-même avec l'interface de communication 40 de chaque borne 7 et fonctionnant sous le même protocole de communication que celle-ci,
- une interface de communication 43 (COM 1), par exemple un MODEM GPRS ou autre, adaptée pour communiquer avec le serveur central S.

Le système qui vient d'être décrit fonctionne comme suit.

Lorsqu'un utilisateur veut emprunter un cycle 1 sur l'une des bornes de verrouillage 7, il peut par exemple insérer une carte électronique portative dans le lecteur 5 de la borne interactive 2 puis rentrer un code secret au moyen du clavier 3, de façon à s'identifier auprès de ladite borne interactive. Après avoir vérifié les droits de l'utilisateur avec le serveur S, la borne interactive 2 donne une autorisation de verrouillage à l'une des bornes de verrouillage 7, de façon qu'un utilisateur puisse déverrouiller le cycle 1 en place sur cette borne en appuyant sur le bouton 7c susmentionné. L'utilisateur peut alors prendre le cycle 1, et l'unité centrale électronique 31 du cycle repère alors l'enlèvement du cycle 1 puisqu'elle ne peut plus communiquer avec l'unité centrale électronique 23 de ce cycle. L'unité centrale électronique 31 de la borne de verrouillage 7 informe alors la borne interactive 2 de cet enlèvement.

Lorsque l'utilisateur rend le cycle 1 et le met en place sur une borne de verrouillage 7, il engage l'organe de verrouillage 10 dans la gâche 8 de la borne de verrouillage. Au cours de ce mouvement, l'organe de verrouillage 10 pivote autour de l'axe de pivotement X1, en étant guidé par les guides 217a de la gâche 8, de façon que l'évidement 15 dudit organe de verrouillage se trouve parfaitement en correspondance avec le bec 38 de l'organe d'accrochage et de façon que les contacts électriques 19 du cycle se trouvent parfaitement en correspondance avec les contacts électriques 34 de la gâche. L'unité centrale électronique 31 de la borne de verrouillage peut alors communiquer avec l'unité centrale électronique 23 du cycle par l'intermédiaire d'au moins certains des contacts 19 et 34 de façon à identifier le cycle et à informer la borne interactive 2 du fait que le cycle a été rendu.

De plus, le circuit d'alimentation électrique 22 de du cycle 1 alimente alors le circuit d'alimentation 30 la borne de verrouillage 7 par l'intermédiaire d'au moins certains des contacts 19, 34, et les deux circuits sont conçus pour que la batterie 25 du cycle, précédemment chargée par la dynamo 26 du cycle, puisse ainsi recharger la batterie 36 de la borne 7. Les circuits d'alimentation électrique 24, 32 du cycle et de la structure d'accueil sont adaptés pour permettre un rechargement de la batterie 36 de la structure d'accueil par la batterie 25 du cycle tant que le dispositif de stockage d'énergie électrique du cycle présente une charge supérieure à un niveau de charge minimum non nul, par exemple au moins 10 % de sa charge nominale (autrement dit, on évite de décharger totalement la batterie 25 du cycle en rechargeant la batterie 36).

On notera que l'on peut soit :
- utiliser des contacts 19, 34 différents pour d'une part, échanger des informations entre les unités centrales 24, 31 du cycle et de la borne, et d'autre part, recharger la batterie 36 de la borne,
- soit utiliser les mêmes contacts 19, 34 pour ces deux fonctions, les signaux d'échange d'informations entre les unités centrales étant alors par exemple séparés par exemple par filtrage.

On notera qu'en variante, la transmission de données entre les unités centrales 23, 31 pourrait se faire par liaison sans fil (par exemple par une liaison radio très courte portée, notamment une liaison RFID) dans tous les modes de réalisation de l'invention, seule l'alimentation de la structure d'accueil de cycle passant alors par les contacts électriques du cycle et de la structure d'accueil.

Selon une autre variante, la batterie 25 du cycle et/ou la batterie 36 de la structure d'accueil pourrait être remplacée par tout autre dispositif de stockage d'énergie électrique, par exemple des supercondensateurs ou autres. De plus, la batterie 36 ou autre dispositif de stockage d'énergie électrique de la structure d'accueil pourrait éventuellement être supprimée, auquel cas la structure d'accueil 7 serait alimentée en énergie électrique par la batterie 25 ou autre dispositif de stockage d'énergie du cycle, uniquement lorsque le cycle est verrouillé sur la structure d'accueil 7.

Toutes les variantes susmentionnées sont utilisables non seulement dans la réalisation décrite ci-dessus, mais également dans toutes les formes de réalisation de l'invention décrites ci-après.

### Première forme de réalisation

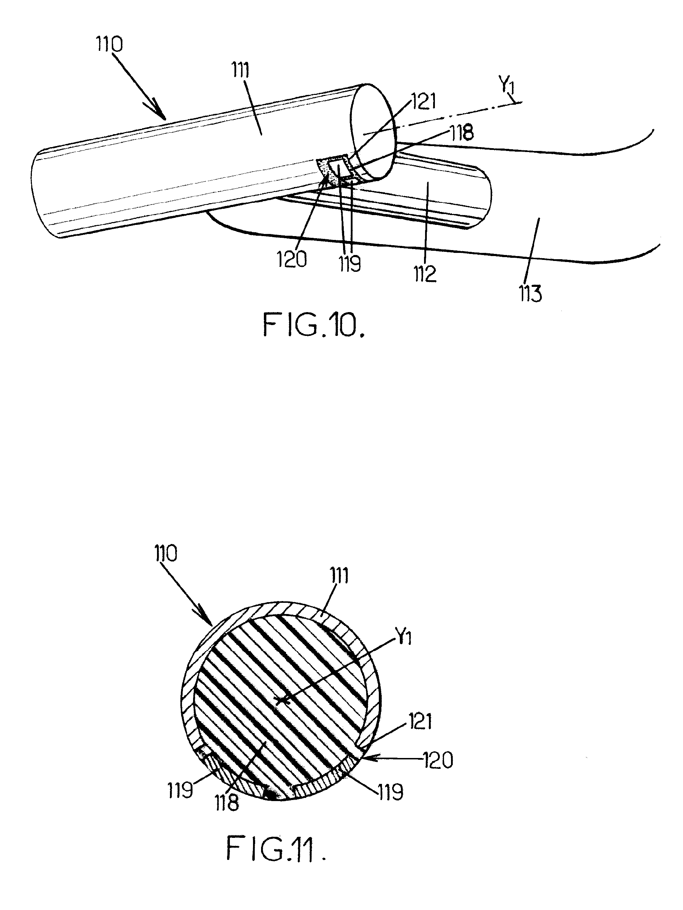

Dans la première forme de réalisation de l'invention, représentée sur les figures 8 à 21, l'architecture générale et le principe de fonctionnement du système automatique de stockage de cycles sont similaires à ceux décrits précédemment et ne seront donc pas décrits à nouveau en détail ici.

Dans cette première forme de réalisation, le système automatique de stockage de cycles peut, comme précédemment, comporter un serveur central S communiquant avec des postes centraux 2 de station de stockage tels que décrits précédemment, communiquant chacun par liaison sans fil, notamment par une liaison radio courte portée du type de celles décrites ci-dessus, avec une pluralité de structure d'accueil de cycles 107, constituées ici par des bornes de verrouillage.

Les cycles 101 du système automatique de stockage de cycles peuvent être notamment des bicyclettes comportant un cadre 101a et une fourche avant 101b solidaires du guidon 101c et pourtant la roue avant 101d du cycle, comme on peut le voir plus en détail sur la figure 9.

Comme représenté sur les figures 9 à 11, la fourche avant 101b du cycle est solidaire d'un organe de verrouillage 110, par exemple métallique, qui peut présenter une forme générale de T. Cet organe de verrouillage 110 peut par exemple comporter une barre transversale rigide 111 qui s'étend longitudinalement selon un axe Y1 horizontal et perpendiculaire à la direction d'avancement du cycle dans la position normale d'utilisation du cycle. La barre transversale 111 peut présenter une section sensiblement circulaire centrée sur l'axe Y1, et elle est solidaire d'un organe de liaison rigide 112, par exemple une tige métallique qui s'étend sensiblement horizontalement vers l'avant à partir d'un support rigide 113 solidaire de la fourche avant 101b du cycle. L'organe de verrouillage 110 comporte des contacts électriques 119 réalisés en matériau électriquement conducteur. Dans l'exemple réalisé ici, ces contacts peuvent notamment être au nombre de deux, et ils peuvent être par exemple formés au voisinage d'une des extrémités de la barre transversale 111.

Plus particulièrement, les contacts électriques 119 peuvent être réalisés en partie inférieure de la barre transversale 111. Cette barre transversale 111 peut notamment être réalisée sous la forme d'un tube métallique doté d'une découpe 121 au voisinage d'une de ses extrémités axiales et les contacts électriques 119 peuvent être disposés dans cette découpe 121. Les contacts électriques 119 peuvent être portés par une matrice isolante 118 réalisé par exemple en matière plastique, laquelle matrice isolante peut être par exemple moulée ou emboîtée à l'intérieur de la barre transversale tubulaire 111.

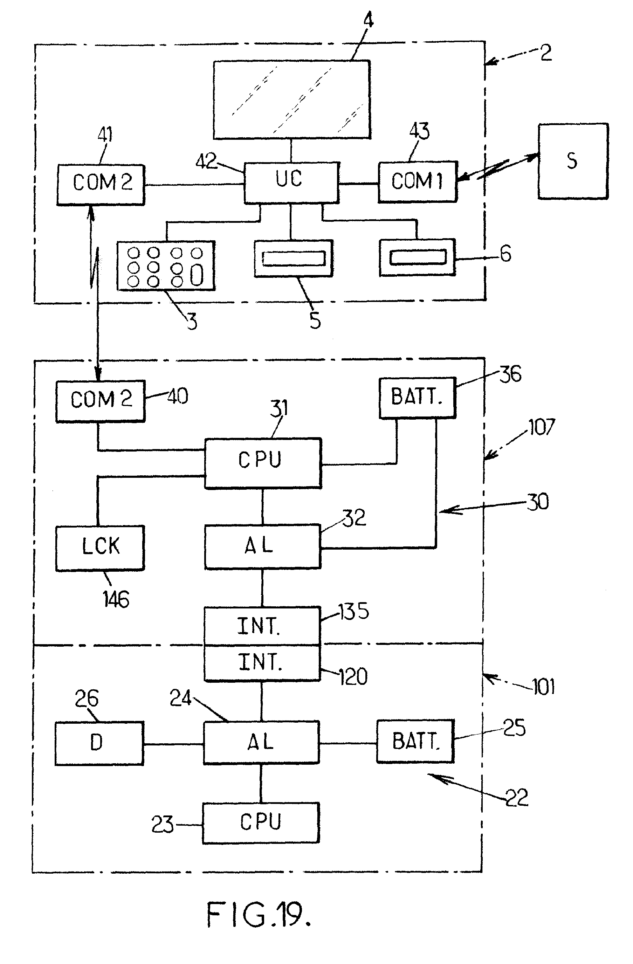

Les contacts électriques 119 sont reliés au circuit électrique 22 du cycle de la même façon que les contacts électriques 19 de la réalisation décrite précédemment et ce circuit électrique est similaire à celui décrit précédemment, comme représenté sur la figure 19.

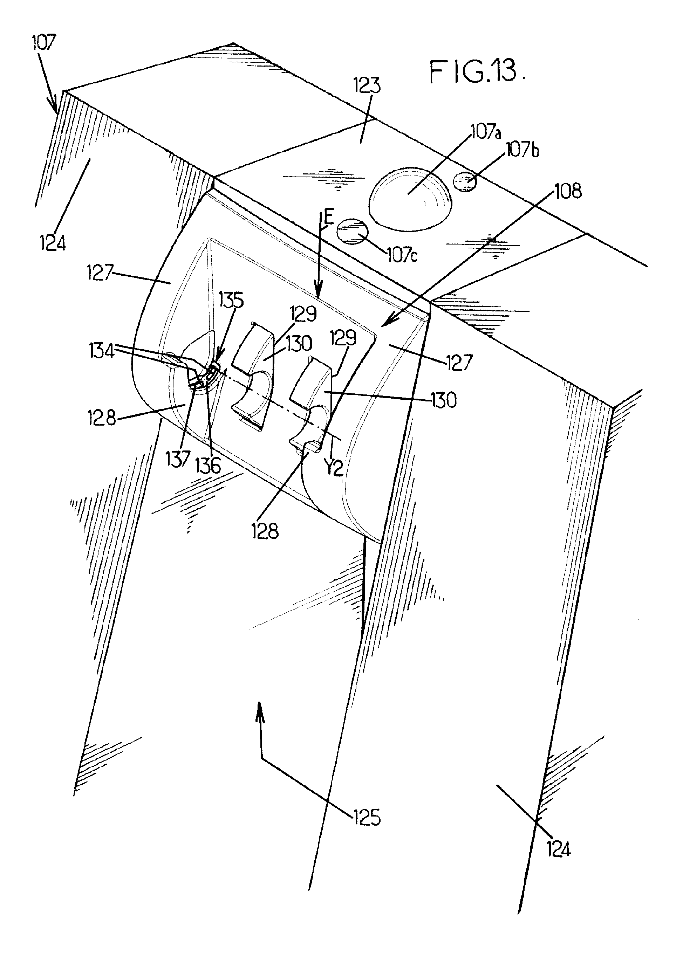

Comme représenté sur les figures 8 et 13, chaque borne de verrouillage 107 comporte une gâche 108 ouverte vers le haut, qui est adaptée pour recevoir la barre transversale 111 de l'organe de verrouillage 110 d'un cycle, par engagement dans une direction d'engagement E sensiblement verticale.

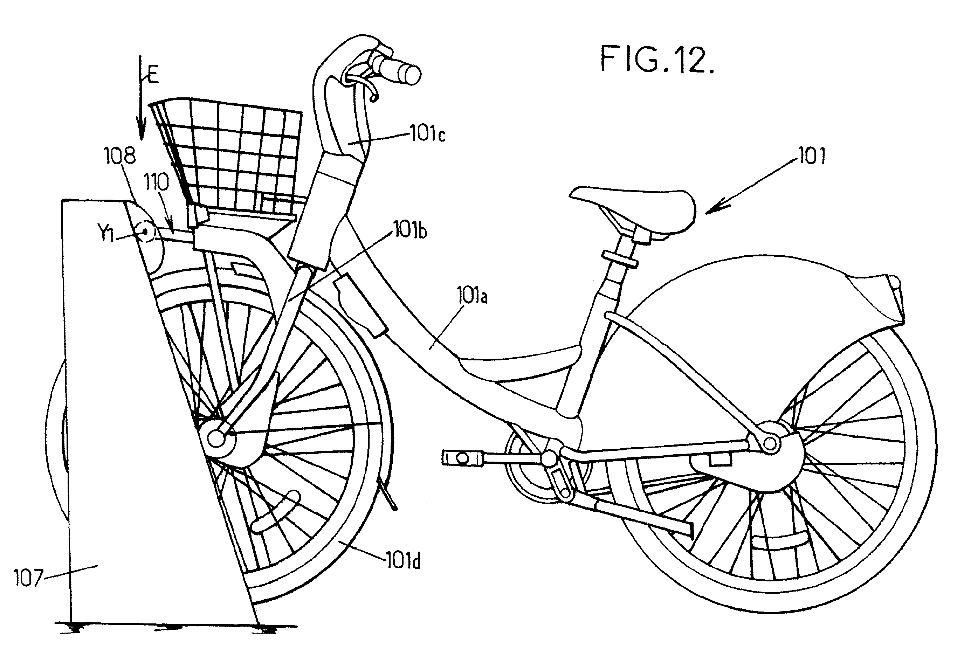

La gâche 108 peut par exemple se présenter sous la forme d'un boîtier métallique rigide 122 qui forme la face avant d'une partie supérieure transversale 123 de la borne 107, laquelle partie supérieure transversale s'étend horizontalement entre deux montants latéraux verticaux 124 fixés au sol. Ces montants 124 définissent entre eux une fente verticale 125 s'étendant vers le bas jusqu'au niveau du sol et adaptée pour recevoir la roue avant 101d d'un cycle 101 verrouillé sur la borne de verrouillage 107, comme on peut le voir sur les figures 8 et 12. La fente 125 peut par exemple présenter une largeur comprise entre 7 et 12 cm.

La borne 107 peut éventuellement comporter comme la borne 7, divers accessoires prévus par exemple sur sa face supérieure, par exemple un lecteur de carte sans contact 107a, un voyant 107b et un bouton de commande 107c pouvant servir par exemple à déclencher le déverrouillage d'un cycle 101 verrouillé sur la borne 107 une fois acquise l'autorisation de déverrouillage.

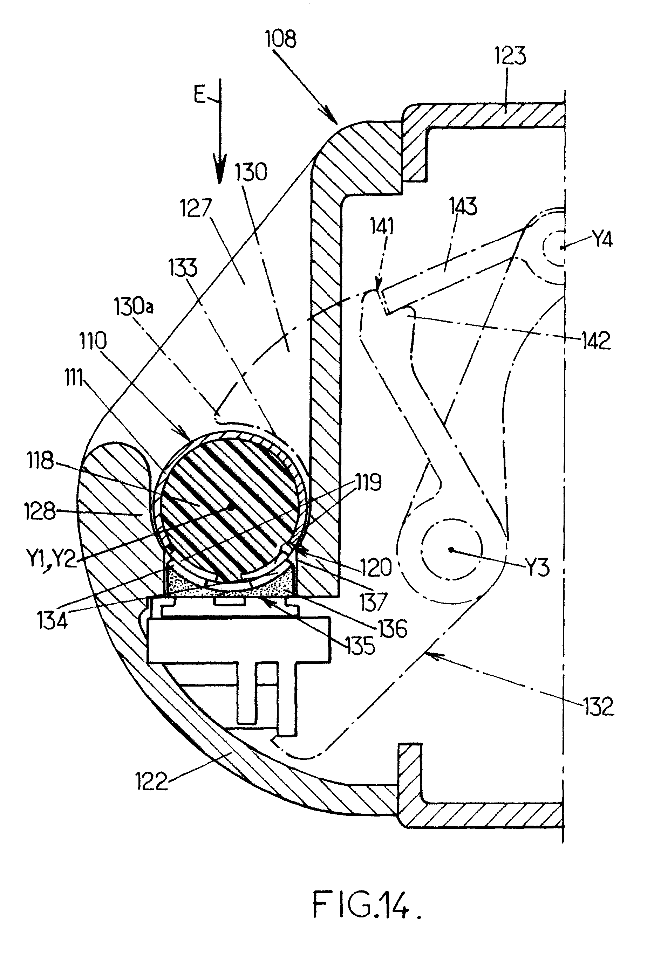

Comme représenté sur les figures 13 et 14, le boîtier 122 de la gâche 108 peut par exemple présenter une paroi frontale 126 sensiblement verticale qui, lorsque l'organe de verrouillage 110 du cycle est engagé dans la gâche 108, est parallèle à l'axe Y1 de la barre transversale 111. Cette paroi frontale 126 est encadrée par deux parois latérales 127 faisant saillie vers l'avant de la borne de verrouillage 107, c'est-à-dire vers le cycle 101 lorsqu'il est verrouillé sur ladite borne de verrouillage. Ces deux parois latérales 127 s'étendent sensiblement verticalement et sensiblement perpendiculairement à la paroi frontale 126, et elles sont écartées l'une de l'autre d'une distance correspondant sensiblement à la longueur horizontale de la barre transversale 111, de façon à ce que la gâche 108 puisse recevoir ladite barre transversale 111 entre les deux parois latérales 127, sensiblement sans jeu ou avec un faible jeu.

Chaque paroi latérale 127 comporte en outre, dans sa partie inférieure, une auge de réception 128, ouverte vers le haut, qui forme, avec la paroi frontale 126, une section sensiblement en forme de J. Les deux auges de réception 128 sont adaptées pour recevoir les deux extrémités axiales de la barre transversale 111 de l'organe de verrouillage du cycle, par engagement vertical vers le bas dans la direction E.

De plus, la gâche 108 comporte des contacts électriques 134 en matériau électriquement conducteur, qui sont par exemple au nombre de deux et qui forment ensemble une interface électrique 135. Ces contacts électriques 134 peuvent être par exemple noyés dans une matrice de matériaux isolants 136, par exemple en matière plastique, et sont reliés au circuit électrique 30 de la borne de verrouillage 107, représenté sur la figure 19, qui est identique ou similaire au circuit électrique précédemment décrit en regard des figures 1 à 7.

Dans l'exemple considéré ici, l'interface électrique 135 est disposée dans une découpe 137 ouverte vers le haut, ménagé dans le fond d'une des auges de réception 128, et les contacts électriques 134 sont disposés pour que les contacts électriques 119 de l'organe de verrouillage du cycle viennent en appui respectivement contre les différents contacts électriques 134 de la borne de verrouillage 107. Avantageusement, le fond des auges de réception 128 présente une forme circulaire centrée sur un axe Y2 horizontal qui, lorsque le cycle est verrouillé sur la borne de verrouillage 107, coïncide avec l'axe Y1 de la barre transversale 111. De plus, les contacts 134 sont également disposés selon un contour circulaire centré sur l'axe Y2, de sorte que les contacts électriques 119, 134 n'interfèrent pas avec un éventuel mouvement de rotation de la barre transversale 111 autour de l'axe Y1, Y2 lorsque le cycle est verrouillé sur la borne de verrouillage 107.

Avantageusement, les contacts électriques 119, 134 sont conformés pour être en contact mutuel sur une certaine plage angulaire de positions relatives entre la barre transversale 111 et la gâche 108 (par exemple une plage de 10 à 20 degrés), en permettant ainsi de conserver la liaison électrique entre le cycle 101 et la borne de verrouillage 107 même si la barre transversale 111 de l'organe de verrouillage du cycle n'est pas dans une position angulaire nominale par rapport à la borne 107.

Par ailleurs, comme on peut le voir sur la figure 13, la paroi frontale 126 du boîtier de la gâche 108 peut présenter par exemple deux fentes verticales 129 au travers desquelles font saillie deux plaques de verrou 130 qui font saillie vers l'avant de la borne de verrouillage 107, c'est-à-dire vers le cycle 101, parallèlement aux deux parois latérales 127.

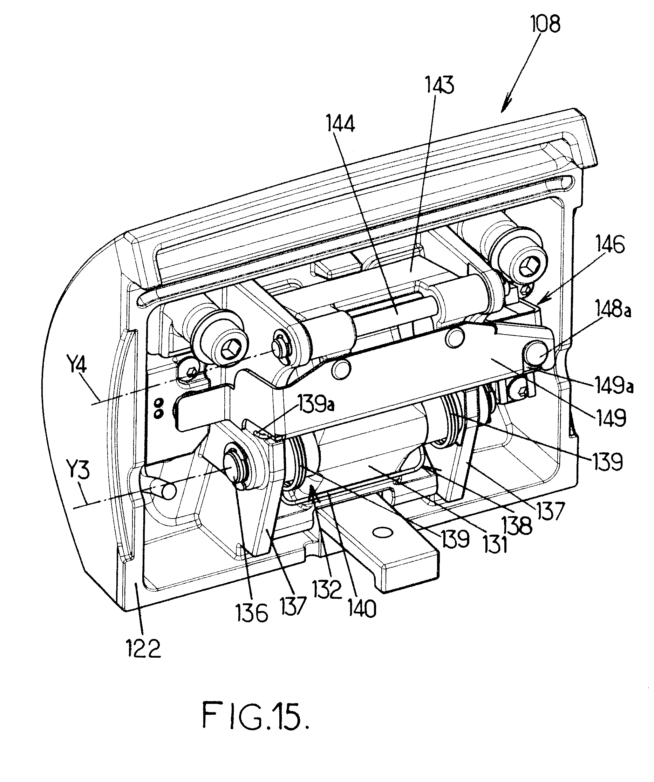

Comme représenté sur les figures 15 à 18, les deux plaques de verrou 130 peuvent être des pièces métalliques qui sont reliées entre elles à l'arrière de la paroi frontale 126 par une paroi arrière transversale 131, de façon à former ensemble, avec cette paroi arrière, une pièce de verrou monobloc rigide 132. Chacune des plaques de verrou 130 présente en outre, dans sa partie avant faisant saillie hors de fentes 129 de la paroi frontale 126, des échancrures 133 en arc de cercle qui peuvent s'étendre chacune sur environ 180 degrés et qui présentent un diamètre correspondant sensiblement au diamètre extérieur de la barre transversale 111 du cycle, de façon à pouvoir recevoir la barre transversale comme il sera expliqué ci-après.

Chacune des plaques de verrous 130 forme, de part et d'autre de l'échancrure 133 correspondante, un bec supérieur et un bec inférieur qui constituent respectivement un organe de blocage 130a et un organe d'actionnement 130b. Dans la position de verrouillage de la pièce de verrou 132, les échancrures 133 sont orientées sensiblement horizontalement vers l'avant de sorte que la barre transversale 111 engagée dans ces échancrures 133 est bloquées dans les auges de réception 128 et empêchée de sortir de ces auges de réception par les organes de blocage 130a des deux plaques de verrous (voir la figure 14).

Les échancrures 133 forment avec les auges de réception 128 un contour intérieur en arc de cercle centré sur l'axe Y2, qui permet à la barre transversale 111 de tourner librement autour de son axe Y1, comme mentionné ci-dessus. De plus, le cadre 101a du cycle 101 peut librement pivoter autour de l'axe vertical du guidon 101c, de sorte que le cycle ne peut pas aisément être cassé ou désolidarisé de la borne 107 par vandalisme : le cadre 101a du cycle ne peut pas être utilisé par des vandales comme un bras de levier permettant d'exercer une force importante sur le verrouillage du cycle 101 à la borne 107.

Enfin, la protection du cycle 101 pendant le stockage est encore renforcée par le fait que la borne 107 protège au moins partiellement la roue avant 101d du cycle.

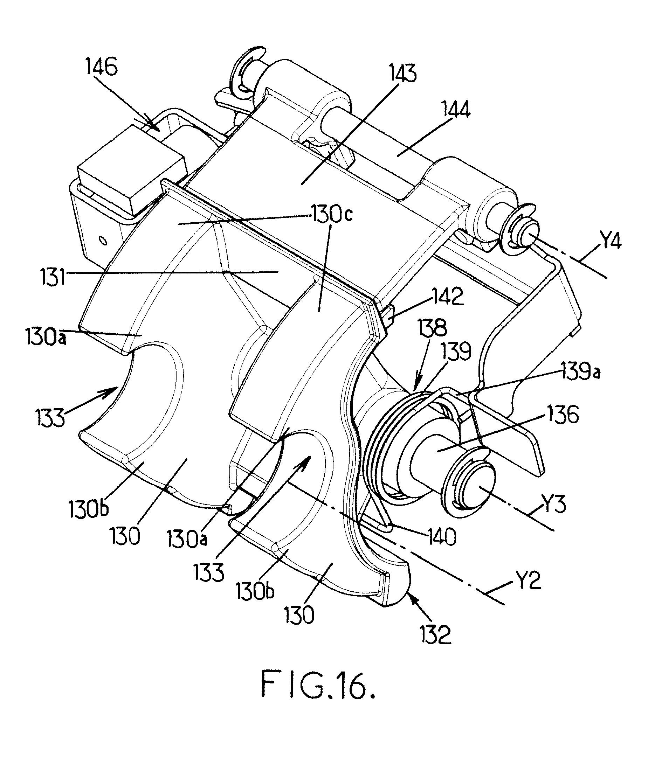

La pièce de verrou 132 est montée pivotante autour d'un axe de rotation Y3 parallèle à l'axe Y2 susmentionné, par exemple au moyen d'une tige de pivot 136 montée tourbillonnante sur deux flasques verticaux parallèles 137 (voir la figure 15) s'étendant perpendiculairement vers l'arrière à partir de la paroi frontale 126 du boîtier 122. Dans l'exemple considéré ici, la pièce de verrou 132 est en outre sollicitée vers le haut, en direction d'une position de déverrouillage qui sera décrite ci-après, au moyen d'un ressort 138. Le ressort 138 peut par exemple être un ressort en fil métallique comprenant deux enroulements 139 enroulés autour de l'axe Y3 de part et d'autre de la paroi arrière de la paroi 131 de la pièce de verrou, chacun de ces enroulements étant prolongé d'une part, par une branche d'extrémité 139a (figures 15 et 16) qui prend appui sur le flasque 137 correspondant et d'autre part, par une partie centrale 140 du fil métallique élastique en forme d'étrier, prenant appui en partie inférieure de la paroi arrière 131.

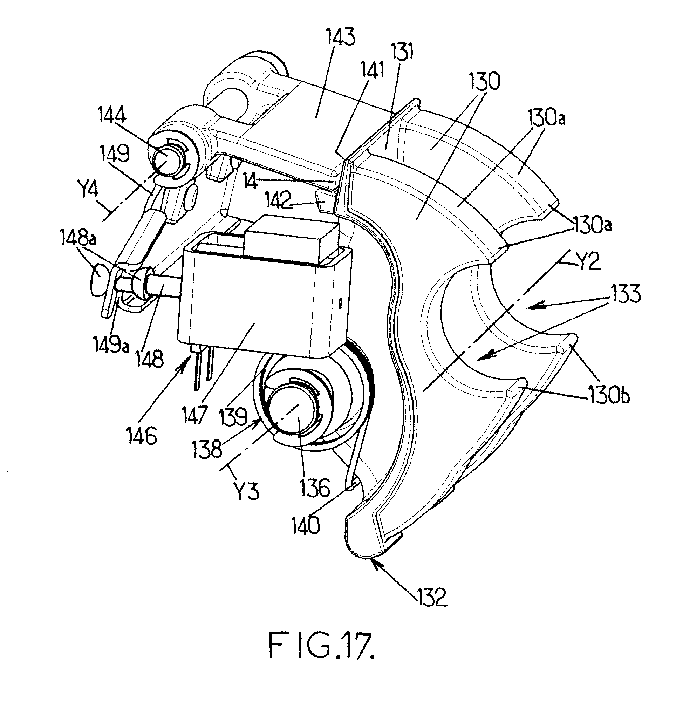

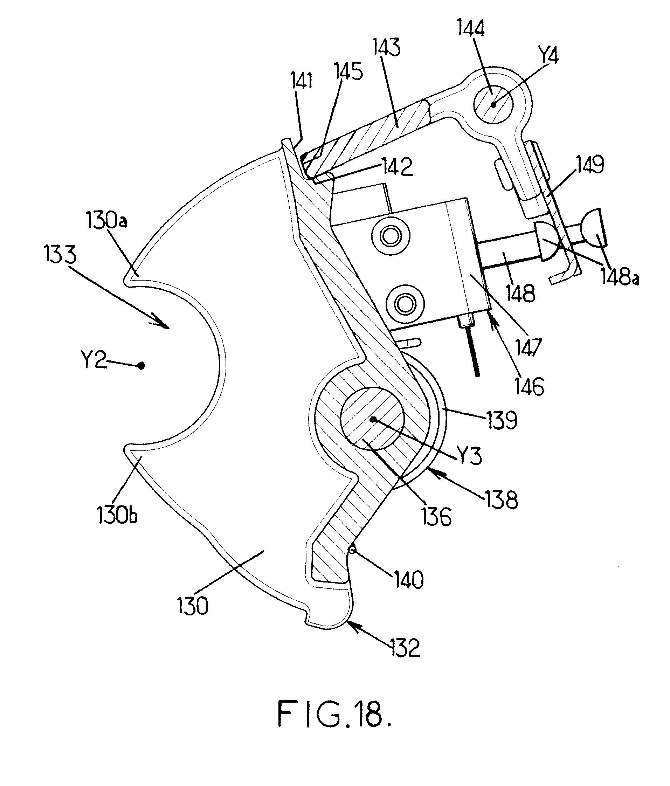

La paroi arrière 131 de la pièce de verrou comporte en outre, dans sa partie supérieure, une zone de butée 141, qui est orientée vers l'arrière et qui est délimitée vers le bas par un épaulement 142 orienté vers le haut appartenant également à ladite paroi arrière 131 (voir les figures 17 et 18).

Outre la pièce de verrou 132, le verrou électrique comporte en outre :
- une gâchette 143 qui se présente sous la forme d'une plaque métallique rigide montée pivotante par rapport à la borne 107 autour d'un axe Y4 parallèle aux axes Y2 et Y3, par exemple au moyen d'une tige pivot 144 tourbillonnant dans les flasques 137 susmentionnées, cette gâchette s'étendant sensiblement vers l'avant jusqu'à une extrémité avant 145 qui est adaptée pour venir buter contre la butée arrière 141 de la pièce de verrou de façon à maintenir ladite pièce de verrou dans le position de verrouillage décrite précédemment, malgré la sollicitation élastique du ressort 138,
- et un actionneur électrique 146, par exemple un actionneur à solénoïde qui comporte un corps 147 et une tige d'actionnement 148 coulissant longitudinalement dans le corps 147, cette tige d'actionnement 148 étant reliée, par exemple par l'intermédiaire d'un levier en tôle 149, à la gâchette 143. A titre d'exemple, l'extrémité distale de la tige d'actionnement 148 peut être engagée dans une fente 149 a du levier 149 et comporter deux butées 148a disposées de part et d'autre de la plaque de tôle formant ce levier 149.

La tige d'actionnement 148 est normalement sollicitée élastiquement vers l'arrière, c'est-à-dire dans la position d'extension de la tige 148, au moyen d'un ressort interne (non représenté) logé dans le corps 146, de façon à solliciter la gâchette 143 vers sa position de butée où l'extrémité avant 145 de la gâchette 143 bute contre la butée 141 de la pièce de verrou. De plus, le corps 147 de l'actionneur 146 comporte un solénoïde qui, lorsqu'il est parcouru par un courant électrique, tire la tige d'actionnement 148 dans une position rétractée qui fait pivoter la gâchette 143 dans une position escamotée où ladite gâchette 143 se trouve au-dessus de la butée 141 de la pièce de verrou, ce qui permet à ladite pièce de verrou 132 de pivoter vers l'arrière autour de l'axe de rotation Y3 de façon que les échancrures 133 des plaques de verrou 130 soit orientée sensiblement vers le haut, en position de déverrouillage.

Lors du passage en position de déverrouillage, l'alimentation électrique de l'actionneur électrique 146 est brève, par exemple moins de dix secondes et avantageusement moins de cinq secondes, puisqu'elle a simplement pour but que la gâchette 143 n'interfère plus avec la butée 141 de la pièce de verrou au début du mouvement de pivotement vers l'arrière de ladite pièce de verrou : une fois ce pivotement initié, l'alimentation électrique de l'actionneur 146 peut être arrêtée, après quoi la gâchette 143 est à nouveau sollicitée vers le bas, et ladite gâchette vient alors simplement en appui contre la surface supérieure circulaire 130a des plaques de verrou 130 sans gêner le pivotement de la pièce de verrou 132.

La consommation électrique de l'actionneur 146 est donc très faible.

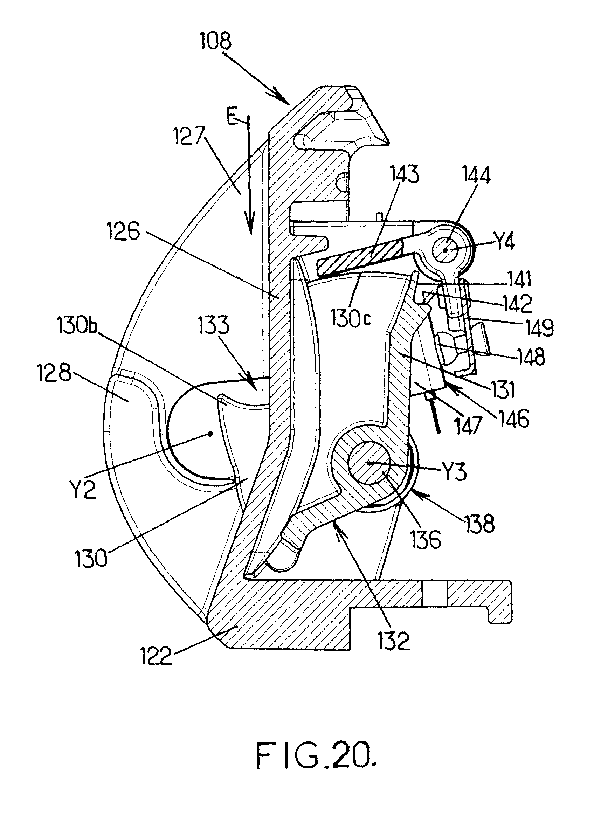

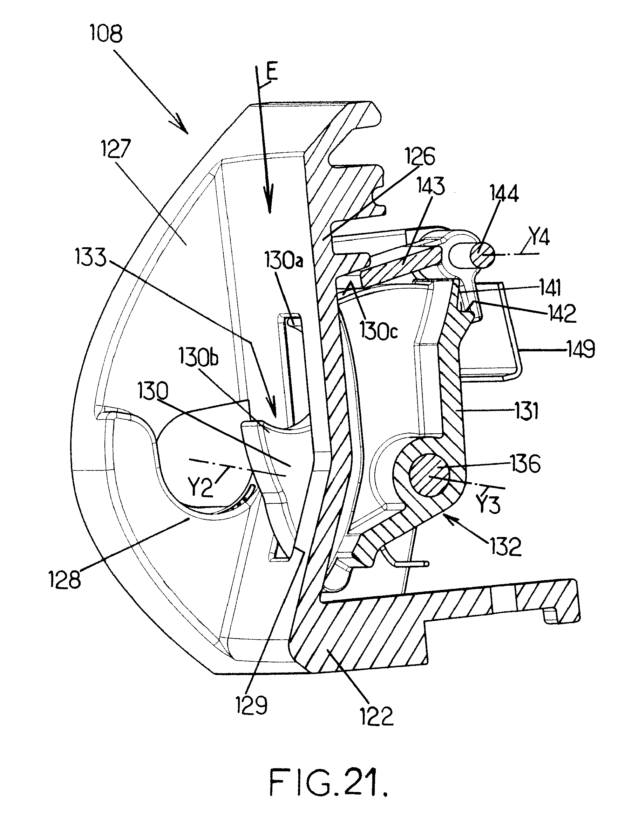

Dans cette position de déverrouillage, qui est bien visibles sur les figures 20 et 21, les organes de blocage 130a des plaques de verrou 130 sont escamotés à l'arrière de la paroi frontale 126 et seuls les organes d'actionnement 130b des plaques de verrou font saillie vers l'avant, de sorte que la barre transversale 111 d'un cycle peut alors librement être enlevé de la gâche 108 en libérant ainsi le cycle 101 correspondant ou, au contraire, engagé dans la gâche 108 verticalement vers le bas dans la direction d'engagement E. Dans ce cas, la barre transversale 111 du cycle que l'on vient verrouiller sur la borne de verrouillage 107 appuie verticalement vers le bas sur les organes d'actionnement 130b des plaques de verrou, ce qui fait pivoter la pièce de verrou 132 vers le bas contre la sollicitation élastique du ressort 138, jusqu'à ce que la gâchette 143 puisse s'engager derrière la butée 141 de la pièce de verrou en appui sur l'épaulement 142 de ladite pièce de verrou, après quoi la pièce de verrou se trouve à nouveau en position de verrouillage comme représenté sur les figures 13 à 18.

Le mode de fonctionnement du système des figures 8 à 21 est par ailleurs similaire à celui des figures 1 à 7, et ne sera donc pas réexpliqué ici, les contacts 19, 34 de la première forme de réalisation étant remplacés par les contacts 119, 134 pour alimenter la batterie 36 des bornes 107 et faire communiquer les unités centrales 31 desdites bornes 107 avec les unités centrales 23 des cycles 101.

### Deuxième forme de réalisation

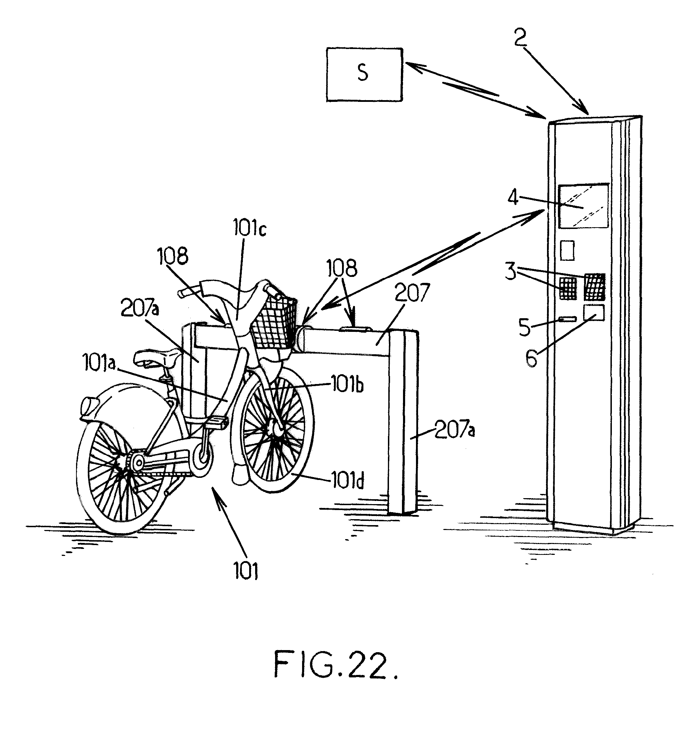

La deuxième forme de réalisation de l'invention, représentée sur la figure 22, se différencie de la première forme de réalisation uniquement par le fait que la structure d'accueil 207 est ici une poutre horizontale métallique qui est fixée au sol par des montants latéraux 207a, cette poutre incluant plusieurs postes de verrouillages de cycles correspondant à plusieurs gâches 108 identiques ou similaires à celles déjà décrites ci-dessus, fixées sur une des faces verticales ou sur les deux faces verticales de la poutre 207.

Dans ce cas, chaque station de stockage de cycles peut comporter une seule ou plusieurs structures d'accueil 207.

On notera que dans la deuxième forme de réalisation, le circuit électrique 30 peut être soit reproduit pour chaque gâche 108, soit certains éléments du circuit électrique 30 peuvent être communs à toutes les gâches 108, notamment l'unité centrale électronique 31, au moins une partie du circuit d'alimentation électrique 32, la batterie 36 et l'interface de communication 40.

### Troisième forme de réalisation

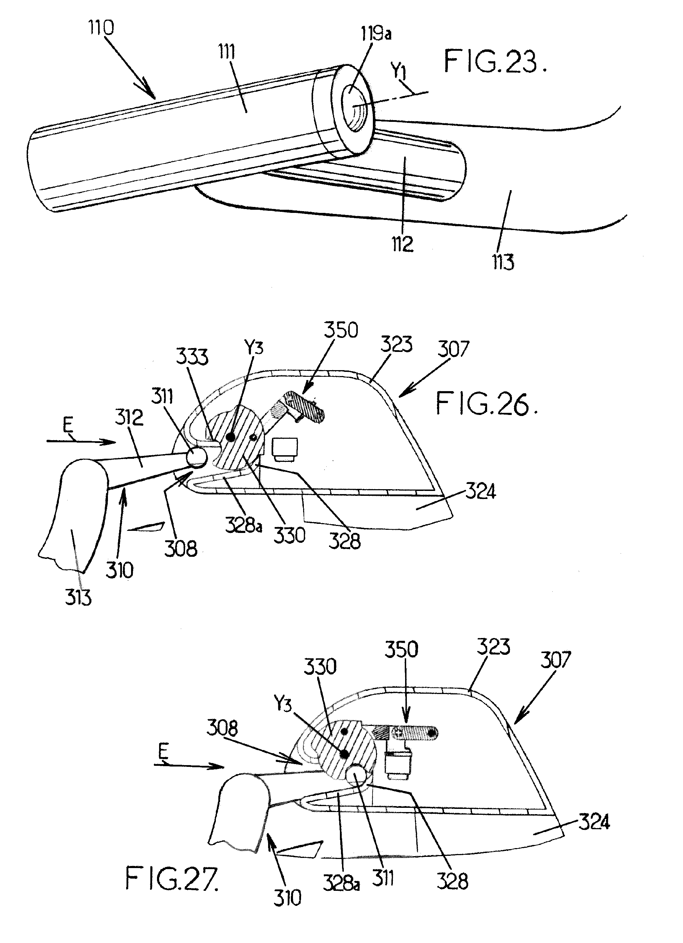

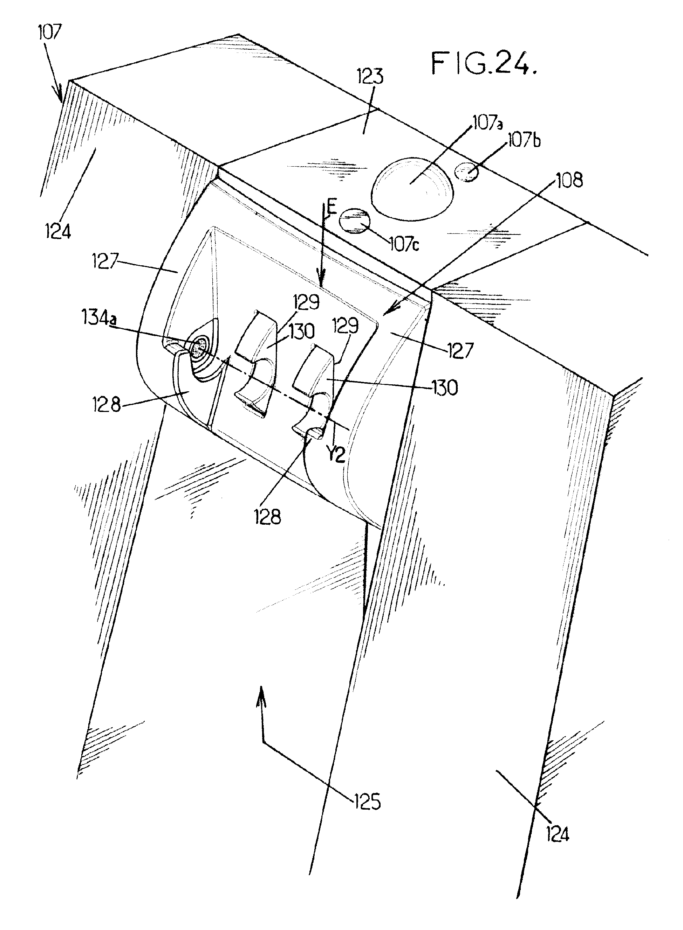

La troisième forme de réalisation de l'invention, représentée sur les figures 23 et 24, se différencie de la première forme de réalisation uniquement par le fait que :
- les contacts électriques 119 sont remplacés par des contacts électriques latéraux 119a, se présentant par exemple sous la forme de deux billes métalliques 119a qui sont disposées respectivement aux deux extrémités axiales de la barre transversale 111 et qui sont sollicitées élastiquement vers l'extérieur selon l'axe Y1 de façon à faire saillie légèrement vers l'extérieur,
- et les contacts électriques 134 de la structure d'accueil sont remplacés par deux contacts latéraux 134a qui sont formés respectivement dans les faces intérieures des deux parois latérales 127 en alignement avec l'axe Y2, de façon que les contacts électriques 119a du cycle viennent en appui respectif sur les contacts électriques 134a de la structure d'accueil.

### Quatrième forme de réalisation

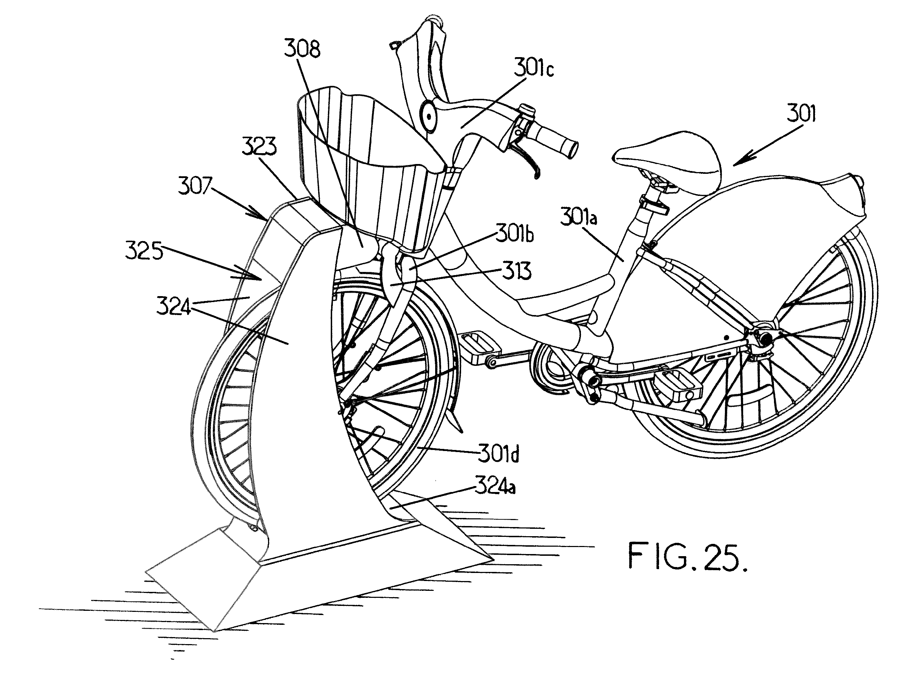

Dans la quatrième forme de réalisation de l'invention, représentée sur la figure 25, la structure et le fonctionnement du système automatique de stockage de cycle sont similaires à ceux décrits précédemment et ne seront donc pas décrits à nouveau en détail ici.

Dans cette quatrième forme de réalisation de l'invention, les cycles 301 sont similaires aux cycles 101 précédemment décrits, avec un cadre 301a qui porte une fourche avant 301b solidaire du guidon 301c et portant la roue avant 301d, la fourche avant 301b étant solidaire de supports rigides 313 se présentant par exemple sous la forme de deux flasques latéraux qui s'étendent parallèlement l'un à l'autre vers l'avant et vers le haut à partir des deux branches de la fourche 301b. Comme représenté plus en détail sur les figures 26 et 27, ces flasques latéraux 313 portent un organe de verrouillage 310 en forme générale de T, comprenant une barre transversale rigide 311, similaire à la barre transversale rigide 111, précédemment décrite, et un organe de liaison rigide 312 qui s'étend vers l'avant à partir des flasques 313. Les cycles 301 peuvent se verrouiller sur des structures d'accueil de cycle 307, constituées ici par des bornes de verrouillage, dont l'une est représentée sur la figure 25.

Cette borne de verrouillage 307 présente une structure générale similaire à la borne de verrouillage 107 précédemment décrite dans la première forme de réalisation, avec une partie supérieure transversale 123 qui porte une gâche 308 adaptée pour recevoir et verrouiller l'organe de verrouillage 310 du cycle, cette partie supérieure transversale 323 s'étendant horizontalement entre deux montants latéraux verticaux 124 solidaires d'une embase 324a elle-même fixée au sol. L'embase 324a peut être prévue pour que la roue avant 301d du cycle repose sur ladite embase lorsque le cycle est verrouillé sur la borne de verrouillage 307, ce qui permet de bien maîtriser la hauteur de l'organe de verrouillage 310 du cycle par rapport à la gâche 308.

Comme représenté sur la figure 26, la gâche 308 peut le cas échéant être ouverte horizontalement selon une direction d'engagement E, et ladite gâche 308 peut comporter, au niveau de chacune des extrémités axiales de la barre transversale 311 une auge 328 ouverte horizontalement et dont la paroi inférieure 328a sert de guide pour la barre transversale 311, lorsque ladite barre transversale 311 est engagée horizontalement dans l'auge 308, comme représenté sur les figures 26 et 27.

La gâche 308 comporte en outre un verrou électrique qui peut par exemple comporter deux plaques de verrou 330 similaires aux plaques de verrou 130 précédemment décrites, comportant chacune une échancrure 333 adaptée pour recevoir la barre transversale 311. Comme représenté sur la figure 27, chaque plaque de verrou 330 est adaptée pour pivoter autour d'un axe de rotation Y3, entre une position déverrouillée où l'échancrure 333 est ouverte horizontalement vers l'embouchure de la gâche 308 pour recevoir la barre transversale 311 (figure 26) et une position verrouillée où l'échancrure 333 est orientée vers le bas, sensiblement à 90° de la position déverrouillée, en bloquant ainsi la barre transversale 333 contre la paroi inférieure 328a de l'auge 328. Le fonctionnement du verrou électrique et notamment des plaques de verrou 330 est donc identique à celui de la première forme de réalisation décrite précédemment. On notera que, comme dans la première forme de réalisation de l'invention, le cadre du cycle 301 peut le cas échéant être soulevé lors d'une tentative de vandalisme, sans pour autant que cette tentative ne donne lieu à une détérioration du cycle 301 ou de la borne de verrouillage 307, puisque la barre transversale 311 peut alors pivoter sur elle-même autour des axes Y1, Y2.

Les plaques de verrou 330 susmentionnées sont commandées par un mécanisme de commande 350 qui peut être similaire à celui décrit dans la première forme de réalisation de l'invention, ou préférentiellement similaire à celui décrit dans le document FR-A-2 905 927.

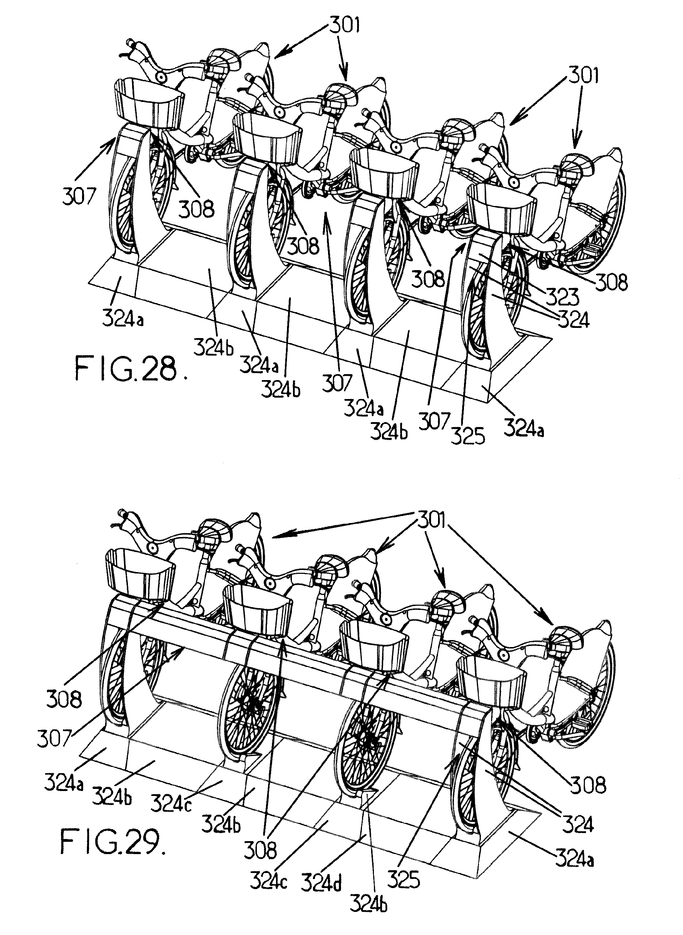

Comme représenté sur la figure 28, plusieurs bornes de verrouillage 307 d'une même station de stockage de cycles peuvent être fixées entre elles au niveau de leurs embases 324a, par des plaques de liaison 324b elles-mêmes fixées au sol. Ce type de montage peut faciliter l'installation des stations de stockage de cycles du système selon l'invention.

Eventuellement, comme représenté sur la figure 29, la structure d'accueil de cycles pourrait comporter deux bornes de verrouillage 307 reliées entre elles par une poutre transversale 307a comportant sur une ou deux de ses faces verticales, des gâches 308 telles que précédemment décrites. Dans l'exemple de la figure 29, la structure d'accueil comporte en outre des embases supplémentaires 324a, pourvues par exemple chacune d'un guide 324d pour les roues avant des cycles, en correspondance avec les gâches 308 de la poutre horizontale 307a. Les différentes embases 324a, 324c sont reliées entre elles, comme dans l'exemple de la figure 28, par des plaques de liaison 324b elles-mêmes fixés au sol.

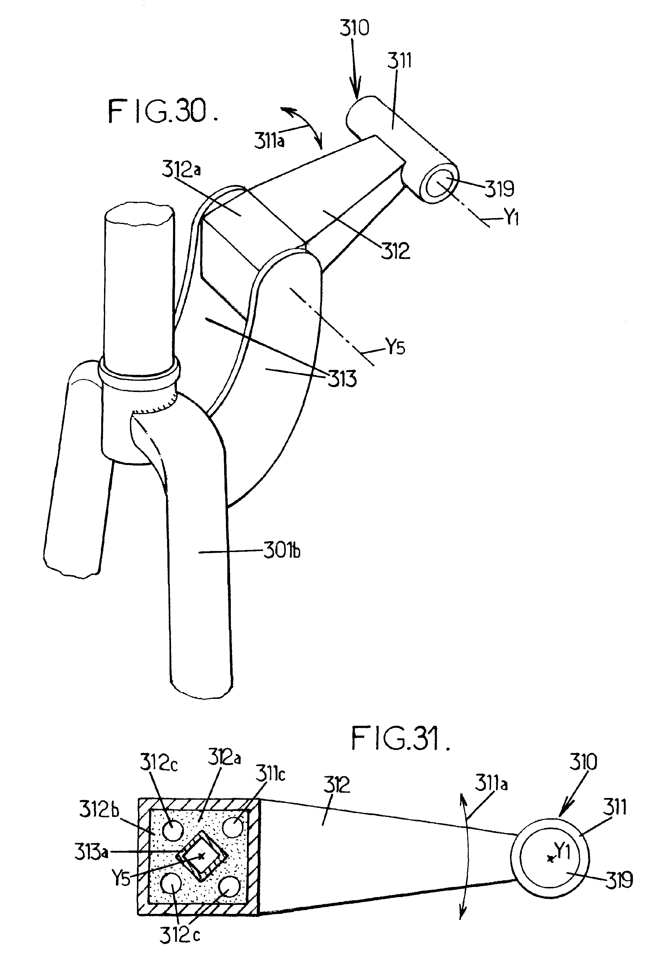

Comme représenté sur les figures 30 et 31, dans la quatrième forme de réalisation de l'invention, l'organe de verrouillage 310 du cycle peut le cas échéant être relié élastiquement aux flasques latéraux 313, de façon à pouvoir pivoter autour d'un axe horizontal Y5 parallèle à l'axe Y1, selon la direction de la double flèche 311a.

A cet effet, l'organe de verrouillage 310 peut par exemple être relié aux flasques 313 au moyen d'un manchon élastique, comprenant par exemple :
- une armature extérieure 312a, solidaire de l'organe de liaison 312 et s'étendant autour de l'axe Y5, cette armature extérieure présentant par exemple une forme tubulaire à section carrée,
- une armature intérieure 313a solidaire des flasques latéraux 313 et s'étendant selon l'axe Y5, cette armature intérieure présentant par exemple une forme tubulaire à section carrée, dont les faces par exemples décalées angulairement de 45° par rapport aux faces de l'armature extérieure 312a,
- et un corps en élastomère 312b remplissant l'espace intermédiaire entre l'armature intérieure 313a et l'armature extérieure 312a, ce corps en élastomère pouvant éventuellement comporter des alvéoles 312c pour lui donner plus de souplesse.

On notera enfin que dans toutes les forme de réalisation de l'invention, les circuits électriques respectifs du cycle et de la structure d'accueil (et notamment les batteries de ces circuits) fonctionnent sous une même tension et préférentiellement à basse tension (par exemple 3V ou 6V) de façon à être peu sensibles à la présence d'eau au niveau des contacts électriques 19, 119, 119a, 34, 134, 134a.

## Revendications

1. Système automatique de stockage de cycles comprenant :
- une pluralité de cycles (101 ; 301) comportant chacun un organe de verrouillage (110 ; 310),
- une pluralité de structures d'accueil fixes (107 ; 207 ; 307 ; 307a) sur lesquelles peuvent se verrouiller lesdits cycles (101 ; 301) et comportant chacune au moins un poste de verrouillage adapté pour recevoir un cycle et incluant :
- une gâche (108 ; 308) ouverte vers le haut selon une direction d'engagement (E) sensiblement verticale et adaptée pour recevoir l'organe de verrouillage (100) d'un cycle par emboîtement selon ladite direction d'engagement (E),
- et un verrou électrique (132, 143, 146 ; 330, 350), comportant un organe de blocage (130a) mobile entre d'une part, une position de verrouillage où ledit organe de blocage est adapté pour bloquer l'organe de verrouillage (110 ; 310) du cycle dans la gâche (108 ; 308) et d'autre part, une position de déverrouillage où l'organe de blocage est adapté pour permettre à l'organe de verrouillage d'entrer et sortir de la gâche,
l'organe de verrouillage (110 ; 310) du cycle comportant une barre transversale (111 ; 311) s'étendant selon un axe longitudinal (Y1) entre deux extrémités, la gâche (108 ; 308) comportant au moins une auge de réception (128 ; 328) ouverte vers le haut et adaptée pour recevoir ladite barre transversale (111 ; 311) avec son axe longitudinal (Y1) disposé sensiblement selon un axe horizontal fixe (Y2) défini par l'auge de réception,
la barre transversale (111 ; 311), l'auge de réception (128 ; 328) et le verrou électrique (132, 143, 146 ; 330, 350) étant conformés pour que la barre transversale (111 ; 311) puisse tourner autour de son axe longitudinal (Y1) lorsque le cycle est verrouillé sur la structure d'accueil.

2. Système selon la revendication 1, dans lequel le verrou comporte au moins un organe d'actionnement (130b) qui est en liaison avec l'organe de blocage (130a), ledit organe d'actionnement (130b) étant mobile avec l'organe de blocage (130a) dans un plan vertical perpendiculaire audit axe horizontal fixe, entre :
- une première position correspondant à la position de déverrouillée du verrou, où ledit organe d'actionnement (130b) est disposé pour interférer avec la barre transversale (111 ; 311) de l'organe de verrouillage lorsque ladite barre transversale est engagée dans l'auge de réception (128 ; 328) dans la direction d'engagement (E),
- et une deuxième position correspondant à la position verrouillée du verrou, ladite barre transversale (111 ; 311) de l'organe de verrouillage étant adaptée pour déplacer l'organe d'actionnement (130b) de sa première à sa deuxième position lorsque ladite barre transversale (111 ; 311) est introduite dans l'auge de réception (128 ; 328), et ledit organe d'actionnement (130b) étant adapté pour actionner le verrou lorsqu'il passe de sa première à sa deuxième position en déplaçant l'organe de blocage (130a) en position de verrouillage.

3. Système selon la revendication 2, dans lequel l'organe de blocage (130a) et l'organe d'actionnement (130b) appartiennent à une même pièce de verrou (132) qui est montée pivotante entre les positions de verrouillage et de déverrouillage, autour d'un axe de rotation horizontal sensiblement parallèle audit axe horizontal fixe (Y2) défini par l'auge de réception (128 ; 328).

4. Système selon la revendication 3, dans lequel la pièce de verrou (132) est sollicitée élastiquement vers la position de déverrouillage et le verrou électrique comporte une gâchette (143) qui est mobile entre d'une part, une position de butée où ladite gâchette est adaptée pour maintenir la pièce de verrou (132) en position de verrouillage et d'autre part, une position escamotée où ladite gâchette (143) permet à la pièce de verrou (132) de passer en position de verrouillage, la gâchette (143) étant sollicitée élastiquement vers la position de butée et le verrou électrique comportant en outre un actionneur électrique (146) adapté pour déplacer le gâchette (143) de sa position de butée à sa position escamotée.

5. Système selon la revendication 3 ou la revendication 4, dans lequel la pièce de verrou (132) comporte une plaque de verrou (130 ; 330) qui s'étend sensiblement perpendiculairement à l'axe horizontal fixe (Y2) et qui comporte une échancrure (133 ; 333) adaptée pour recevoir la barre transversale (111 ; 311), ladite plaque de verrou (130 ; 330) formant deux becs qui encadrent ladite échancrure (133 ; 333) et constituent respectivement l'organe de blocage (130a) et l'organe d'actionnement (130b).

6. Système selon l'une quelconque des revendications 3 à 5, dans lequel l'organe de verrouillage (110 ; 310) du cycle comporte une pièce de liaison (112 ; 312) solidaire de la barre transversale (111 ; 311) et formant un T avec cette barre transversale, et la pièce de verrou (132) comporte deux plaques de verrou (130 ; 330) solidarisées entre elles et adaptées pour s'engager sur la barre transversale (111 ; 311) de part et d'autre de la pièce de liaison (112 ; 312).

7. Système selon la revendication 6, dans lequel la gâche (108 ; 308) comporte deux auges de réception (128 ; 328) disposées pour recevoir chacun une extrémité de la barre de liaison (111 ; 311).

8. Système selon la revendication 7, dans lequel la gâche (108 ; 308) comporte également des parois latérales (127) coopérant chacune par butée avec une extrémité de la barre transversale (111 ; 311) pour centrer ladite barre transversale lorsque le cycle (101 ; 301) est verrouillé sur le poste de verrouillage.

9. Système selon l'une quelconque des revendications précédentes, dans lequel la barre transversale (111 ; 311) présente une section sensiblement circulaire.

10. Système selon l'une quelconque des revendications précédentes, dans lequel la structure d'accueil forme une borne (107) comportant une fente (125) adaptée pour recevoir la roue avant du cycle lorsqu'il est verrouillé sur ladite structure d'accueil.

11. Système selon l'une quelconque des revendications précédentes, dans lequel le cycle comporte un guidon (101c ; 301c) solidaire d'une fourche (101b ; 301b) qui porte la roue avant, l'organe de verrouillage (110 ; 310) du cycle étant solidaire de la fourche du cycle.

12. Système selon l'une quelconque des revendications précédentes, dans lequel la structure d'accueil comporte une poutre sensiblement horizontale (207 ; 307) comportant plusieurs postes de verrouillage.

13. Cycle comportant un organe de verrouillage (310) comprenant une barre transversale (311) s'étendant sensiblement horizontalement dans une position normale d'utilisation du cycle, le cycle comportant un guidon (301c) solidaire d'une fourche (301b) qui porte la roue avant, l'organe de verrouillage comportant une pièce de liaison (312) reliant la barre transversale à un support (313) solidaire de la fourche, cette pièce de liaison s'étendant sensiblement horizontalement, dans la position normale d'utilisation du cycle, et ladite pièce de liaison étant reliée au support par une liaison élastique (312b) adaptée pour permettre un débattement vertical de ladite pièce de liaison (312).

14. Structure d'accueil pour un système automatique de stockage de cycles selon l'une quelconque des revendications 1 à 12, cette structure d'accueil comportant au moins un poste de verrouillage adapté pour recevoir un cycle (101 ; 301) et incluant :
- une gâche (108 ; 308) ouverte vers le haut selon une direction d'engagement (E) sensiblement verticale et adaptée pour recevoir l'organe de verrouillage (110 ; 310) d'un cycle par emboîtement selon ladite direction d'engagement (E),
- et un verrou électrique (132, 143, 146 ; 330, 350), comportant un organe de blocage (130a) mobile entre d'une part, une position de verrouillage où ledit organe de blocage est adapté pour bloquer l'organe de verrouillage (110 ; 310) du cycle dans la gâche (108 ; 308) et d'autre part, une position de déverrouillage où l'organe de blocage est adapté pour permettre à l'organe de verrouillage d'entrer et sortir de la gâche,
la gâche (108 ; 308) comportant au moins une auge de réception (128 ; 328) ouverte vers le haut et définissant un axe horizontal (Y2), l'auge de réception étant adaptée pour recevoir une barre transversale (111 ; 311) appartenant à l'organe de verrouillage (110 ; 310) du cycle avec son axe longitudinal (Y1) disposé sensiblement selon ledit axe horizontal (Y2) défini par l'auge de réception, l'auge de réception (128 ; 328) et le verrou électrique (132, 143, 146 ; 330, 350) étant conformés pour que la barre transversale (111 ; 311) puisse tourner autour de son axe longitudinal (Y1) lorsque le cycle est verrouillé sur la structure d'accueil.
